# EUROPÄISCHE PATENTSCHRIFT

(11) **EP 1 178 238 B1**
(45) Veröffentlichungstag und Bekanntmachung des Hinweises auf die Patenterteilung: **30.08.2006**
(21) Anmeldenummer: 01115578.5
(22) Anmeldetag: 28.06.2001
(51) Int. Cl.: F16F 9/46, F16F 9/06

(54) **Zweirohr-Stossdämpfer**
Twin-tube type shock absorber
Amortisseur de choc bitubulaire

(30) Priorität: 31.07.2000 DE 20013228 U
(43) Veröffentlichungstag der Anmeldung: 06.02.2002
(73) Patentinhaber: Wohlfarth, Klaus, 71540 Fichtenberg (DE)
(72) Erfinder: Pfeifer, Anton, 93485 Rimbach (DE)
(74) Vertreter: Zipse + Habersack

(56) Entgegenhaltungen:
- DE-C- 910 868
- FR-A- 1 097 456
- FR-A- 2 418 390
- FR-A- 2 461 851
- GB-A- 694 544
- JP-A- 8 170 680
- JP-A- 49 021 565
- JP-A- 58 017 277

## Beschreibung

Die Erfindung betrifft einen Stoßdämpfer, sowohl als Öl- als auch als Gasdruckdämpfer, mit einem Hauptdämpfungsventil und Rücklauföffnungen an dem auf einer Kolbenstange montierten Dämpfungskolben.

Es ist bekannt, bei einem Zweirohr-Stoßdämpfer eine Bypass-Regelung zum Verändern des Einfederungsverhaltens vorzusehen. Es ist auch bekannt, diese Bypass-Regelung von außerhalb des Stoßdämpfers einstellbar auszubilden. Das Ausfederungsverhalten des Stoßdämpfers ist dagegen konstruktiv vorgegeben und damit nicht nachträglich von außerhalb des Stoßdämpfers einstellbar.

Der Erfindung liegt die Aufgabe zugrunde, einen Stoßdämpfer zu schaffen, auf dessen Ausfederungsverhalten von außerhalb des Stoßdämpfers Einfluss genommen werden kann.

Diese Aufgabe wird mit einem Stoßdämpfer gemäß Anspruch 1 gelöst.

Weiterbildungen der Erfindung sind in den Unteransprüchen beschrieben.

Über eine Einstellstange, die sich zweckmäßig durch die hohlgebohrte Kolbenstange erstreckt, ist in der Bypass-Öffnung ein Steuerkonus und mit diesem der Querschnitt der Bypass-Öffnung einstellbar. Damit ist es in einfacher Weise möglich, von außerhalb des Stoßdämpfers die Zugdämpfungs-Kennlinie einzustellen.

Im Stand der Technik ist gemäß der GB 694,544 ein Zweirohr-Stoßdämpfer bekannt, der ein Hauptdämpfungsventil und Rücklauföffnungen an einem auf einer Kolbenstange befestigten Dämpfungskolben aufweist. Der Steuerkonus ist mit einer Feder vorgespannt, wobei die Kraft der Federvorspannung über eine Einstellstange von außerhalb des Stoßdämpfers justiert werden kann. Die Position des Steuerkonus ist damit abhängig von dem auf den Steuerkonus durch das Fluid ausgeübten Druck (siehe ferner JP 49 021 565). Gemäß der FR 2 418 390 ist ein Zweirohr-Stoßdämpfer mit einer einstellbaren Dämpfungsstufe offenbart, in dem die Stellung eines Nadelventils innerhalb eines Gewindeadapters mit einer Einstellstange von außerhalb des Stoßdämpfers justierbar ist. Ferner ist in der JP 08 170 680 oder in der FR 1 097 456 jeweils ein Stoßdämpfer aufgezeigt, der einen Steuerkonus aufweist, der innerhalb einer Axialbohrung eines Gewindeadapters vorgesehen ist.

Die Erfindung wird nachfolgend anhand beigefügter Zeichnungen näher erläutert. Es zeigen

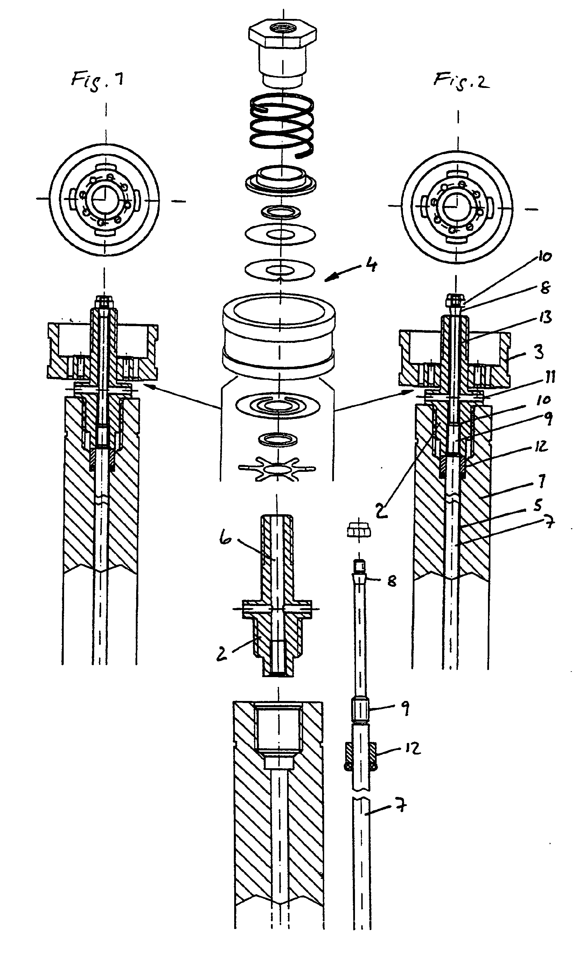

Fig. 1 und 2 jeweils in Draufsicht und im Axialschnitt den Kolben mit Kolbenstange und einstellbarer Zugdämpfung, einmal bei geschlossener Bypass-Öffnung und einmal bei voll geöffneter Bypass-Öffnung, und dazwischen in Explosionsdarstellung die konventionellen Teile des Hauptdämpfungsventils sowie die Kolbenstange mit Gewindeadapter und Einstellstange.

Am unteren Ende der hohlgebohrten Kolbenstange 1 ist ein Gewindeadapter 2 eingeschraubt, der seinerseits den Dämpfungskolben 3 trägt. Im Dämpfungskolben 3 ist mit den üblichen Teilen 4 das Hauptdämpfungsventil ausgebildet. Im Gewindeadapter 2 befindet sich in axialer Verlängerung der Kolbenstangenbohrung 5 eine Axialbohrung 6, durch welche beide Bohrungen 5 und 6 sich die Einstellstange 7 mit Steuerkonus 8 an ihrem unteren Ende erstreckt. Die Einstellstange 7 ist mit einem Einstellgewinde 9 mehr oder minder tief in die Axialbohrung 6 des Gewindeadapters 2 einschraubbar, zwischen einer Stellung gemäß Figur 1, in welcher der Steuerkonus 8 gegen das Austrittsende der Axialbohrung 6 anliegt und den Ringspalt zwischen Einstellstange 7 und Axialbohrung 6 verschließt, und einer Stellung gemäß Figur 2 mit maximal abgehobenem Steuerkonus 8 und damit maximaler Bypass-Öffnung 13. Die beiden Endstellungen der Einstellstange 7 sind durch Endanschläge 10 gesichert. Der Ringspalt im Gewindeadapter zwischen Einstellstange 7 und Axialbohrung 6 steht über eine Öleinströmbohrung 11 mit dem Ölraum des Stoßdämpfers in Verbindung. Eine Dichtung 12 dichtet die Kolbenstangenbohrung 5 gegenüber der Bypass-Öffnung im Gewindeadapter 2 ab.

Die Einstellstange 7 ist von außerhalb des Zweirohr-Stoßdämpfers (nicht gezeigt) zwischen den Endstellungen von Figuren 1 und 2 einstellbar, um dadurch die Bypass-Öffnung 13 zu ändern und auf die Zugdämpfungs-Kennlinie Einfluß zu nehmen.

## Patentansprüche

1. Stoßdämpfer, sowohl als Öl- als auch als Gasdruckdämpfer, mit einem Hauptdämpfungsventil und Rücklauföffnungen an einem auf einer Kolbenstange (1) über einen Gewindeadapter (2) befestigten Dämpfungskolben (3) und mit einer einstellbaren Zugdämpfung,wobei der Gewindeadapter (2) eine eine Bypass-Öffnung (13) bildende Axialbohrung (6) aufweist, und wobei die einstellbare Zugdämpfung einen Steuerkonus (8) und eine Einstellstange (7) umfasst, wobei die Einstellstange (7) die Stellung des Steuerkonus (8) und mit diesem den Querschnitt der Bypass-Öffnung (13) von außerhalb des Stoßdämpfers einstellt; wobei die Axialbohrung (6) des Gewindeadapters (2) an der der Kolbenstange (1) abgewandten Seite des Dämpfungskolbens (3) ein Austrittsende aufweist, das einen Ausströmort des Fluids für die Zugstufe bildet,
**dadurch gekennzeichnet, dass** der Steuerkonus (8) am Austrittsende der Axialbohrung (6) des Gewindeadapters (2) vorgesehen ist, und dass der Stoßdämpfer als ein Zweirohr-Stoßdämpfer ausgebildet ist.

2. Stoßdämpfer nach Anspruch 1,
**dadurch gekennzeichnet, dass** der Steuerkonus (8) am Ende der Einstellstange (7) sitzt.

3. Stoßdämpfer nach Anspruch 1 oder 2,
**dadurch gekennzeichnet, dass** sich die Einstellstange (7) durch die hohlgebohrte Kolbenstange (1) erstreckt.

4. Stoßdämpfer nach einem der vorangehenden Ansprüche,
**gekennzeichnet durch** Endanschläge (10) zur Begrenzung des Einstellbereichs der Einstellstange nach beiden Richtungen.

## Claims

1. A shock absorber of both the hydraulic and pneumatic type comprising a main damping valve and return orifices at a damper piston (3) secured to a piston rod (1) via a screwed adapter (2) and with adjustable rebound damping, said screwed adapter (2) comprising an axial bore (6) forming a bypass orifice (13), said adjustable rebound damping comprising a control cone (8) and an adjuster rod (7) adjusting the position of said control cone (8) and therewith the cross-section of said bypass orifice (13) from outside of said shock absorber; said axial bore (6) of said screwed adapter (2) comprising at the side of said damper piston (3) facing away from said piston rod (1) an outlet end forming an outlet location of the fluid for the rebound stage,
**characterized in that** said control cone (8) is provided at the outlet end of said axial bore (6) of said screwed adapter (2) and that said shock absorber is configured as a twin-tube shock absorber.

2. The shock absorber as set forth in claim 1
**characterized in that** said control cone (8) is located at the end of said adjuster rod (7).

3. The shock absorber as set forth in claim 1 or 2,
**characterized in that** said adjuster rod (7) extends through said tubular piston rod (1).

4. The shock absorber as set forth in any of the preceding claims
**characterized by** end stops (10) for defining the adjustment range of said adjuster rod in both directions.

## Revendications

1. Amortisseur de choc, autant sous forme d'amortisseur hydraulique que d'amortisseur à gaz comprimé, avec une soupape d'amortissement principale et des ouvertures de conduite de retour sur un piston d'amortissement (3) fixé sur une tige de piston (1) via un embout fileté (2) et avec un amortissement de détente réglable, l'embout fileté (2) présentant un alésage axial (6) formant une ouverture bypass (13), et l'amortissement de détente réglable comprenant un cône de commande (8) et une tige de réglage (7), la tige de réglage (7) réglant la position du cône de commande (8) et ainsi le diamètre de l'ouverture bypass (13) à partir de l'extérieur de l'amortisseur de choc, l'alésage axial (6) de l'embout fileté (2) présentant sur la face du piston d'amortissement (3) opposée à la tige de piston (1) une extrémité de sortie formant un lieu d'écoulement du fluide pour l'amortissement de détente,
**caractérisé par le fait que** le cône de commande (8) est prévu à l'extrémité de sortie de l'alésage axial (6) de l'embout fileté (2) et que l'amortisseur de choc est configuré en tant qu'amortisseur de choc bitubulaire.

2. Amortisseur de choc selon la revendication 1,
**caractérisé par le fait que** le cône de commande (8) est placé à l'extrémité de la tige de réglage (7).

3. Amortisseur de choc selon la revendication 1 ou 2,
**caractérisé par le fait que** la tige de réglage (7) se prolonge dans la tige de piston (1) creuse.

4. Amortisseur de choc selon l'une quelconque des revendications précédentes,
**caractérisé par** des butées de fin de course (10) limitant le domaine de réglage de la tige de réglage dans les deux directions.
